# EUROPÄISCHE PATENTSCHRIFT

(11) **EP 0 295 493 B1**
(45) Veröffentlichungstag und Bekanntmachung des Hinweises auf die Patenterteilung: **06.04.1994**
(21) Anmeldenummer: 88108729.0
(22) Anmeldetag: 01.06.1988
(51) Int. Cl.: C08J 5/18, C08L 55/02

(54) **Giess-Folien aus ABS-Kunststoffen**
ABS cast film
Feuilles coulées à partir d'ABS

(30) Priorität: 13.06.1987 DE 3719849
(43) Veröffentlichungstag der Anmeldung: 21.12.1988
(73) Patentinhaber: BAYER AG, 51368 Leverkusen (DE)
(72) Erfinder: Schumann, Werner, Dipl.-Ing., D-5024 Pulheim (DE); Tischer, Werner, Dipl.-Ing., D-4047 Dormagen 11 (DE)

(56) Entgegenhaltungen:
- EP-A- 0 023 291
- EP-A- 0 101 900
- EP-A- 0 251 044
- FR-A- 2 355 640
- US-A- 4 076 769
- Taschenbuch der Kunststoff-Additive, Carl Hanser Verlag München, 1979, Seiten 520-521

## Beschreibung

Gegenstand der Erfindung ist ein Verahren zur Herstellung von Monofolien aus ABS-Kunststoffen oder deren Blends mit anderen Thermoplasten mit Foliendicke von 1 bis 200 µm, vorzugsweise von 5 bis 100 µm, die selbsttragend, einfärbbar, durchscheinend, bedruckbar, galvanisierbar und flammhemmend, sowie antistatisch ausrüstbar sind.

Das US-Patent 4 076 769 setzt ABS-Folien größerer Dicke als bekannt voraus und beschäftigt sich damit, durch Recken aus diesen Folien dünnere Folien zu machen. Zur Herstellung der dicken Folien ist in Spalte 2 im letzten Absatz angedeutet, daß man ein "solution casting unit" verwenden kann, es ist aber über die Herstellung auch der dickeren Folien weiter nichts gesagt. In der Spalte 1, Zeilen 47 bis 50, wird mitgeteilt, daß die Ausgangsmaterialien, nämlich kommerzielle ABS-Harze übliche Additive enthalten können. Aus dieser Literaturstelle läßt sich nicht entnehmen, daß einer ABS-Lösung bestimmte definierte Mengen eines bestimmten Additivs zuzusetzen und dadurch zu erreichen ist, daß man in einem Arbeitsgang sehr dünne, von der Unterlage abnehmbare, d.h. selbsttragende Folien erhält.

ABS-Kunststoffe, im Sinne dieser Erfindung, sind Pfropfpolymerisate harzbildender Monomerer auf einen Kautschuk, gegebenenfalls im Gemisch mit einem Copolymerisat der harzbildenden oder ähnlicher Monomerer.

Pfropfbasis des Pfropfpolymerisats ist bevorzugt ein Dienkautschuk, wie Polybutadien, Polyisopren oder ein Copolymerisat von Butadien und Styrol. Ebenfalls geeignet sind Acrylat-Kautschuke, z.B. Polybutylacrylat und EPDM-Kautschuke, z.B. aus Ethylen, Propylen und einem nicht konjugierten Dien wie Norbornadien. Alle als Pfropfbasis benutzten Kautschuke sind mindestens teilvernetzt.

Pfropfmonomere sind bevorzugt Styrol, Kern- oder Seitenketten-substituierte Styrole, Acrylnitril, Methylmethacrylat oder Mischungen daraus. Bevorzugt ist ein Gemisch aus Styrol (50 bis 90 Gew.-%) und Acrylnitril (50 bis 10 Gew.-%). Im allgemeinen enthält das Pfropfcopolymerisat 10 - 80 Gew.-% Kautschuk, bevorzugt 20 - 50 Gew.-%. Solche Pfropfpolymerisate sind bekannt und ihre Herstellung ist Stand der Technik. Im allgemeinen erhält man solche Pfropfpolymerisate durch Polymerisation der Monomeren in Anwesenheit des Kautschuks mit Hilfe von radikalischen Initiatoren. Die Pfropfpolymerisation ist in der Regel nicht vollständig, es entstehen neben den chemisch an den Kautschuk gebundenen "Pfropfästen" auch freie Copolymerisate der Pfropfmonomeren. Erhalten wird also ein Gemisch aus dem eigentlichen Pfropfpolymerisat und freiem Copolymerisat. In vielen Fällen setzt man, zur Beeinflussung der Eigenschaften des Materials, weiteres Copolymerisat zu. ABS-Kunststoffe dieser Art und ihre Herstellung sind ebenfalls bekannt und Stand der Technik.

Der Begriff "ABS" steht an sich für Acrylnitril-Butadien-Styrol-Kunststoffe. Er wird aber hier so verstanden, daß er auch ähnliche Materialien, d.h. Pfropfpolymerisate mit anderen Kautschuken als Polybutadien und anderen Pfropfmonomeren als Styrol und Acrylnitril einschließen soll.

Erfindungsgemäß können reine ABS-Kunststoffe, wie oben beschrieben, zur Herstellung der Folien verwendet werden; es ist aber auch möglich, diese Stoffe mit weiteren thermoplastischen Kunststoffen, z.B. aromatischem Polycarbonat, Polyvinylchlorid, Ethylen/Vinylacetat-Copolymerisat zu mischen, wobei der ABS-Anteil mindestens 50 Gew.-% des Gemisches darstellt.

Selbsttragende, dünne Folien, aus solchen Materialien, sind bisher nicht herstellbar. Man hat versucht, Folien durch Extrusion und durch Kalandrieren von Schmelzen von ABS-Kunststoffen herzustellen, dabei aber nur dickere Folien mit Foliendicken von >200 µm erhalten. Es ist auch versucht worden, dünne Folien durch Recken dickerer Folien zu erzeugen, dabei hat man aber keine selbsttragenden Folien erhalten, und man konnte nicht mit endlosen Bahnen arbeiten. Es wurde ebenfalls versucht, Lösungen von ABS-Kunststoffen auf Substraten zu vergießen und das Lösungsmittel zu entfernen, mit dem Ergebnis, daß man Überzüge erhielt, welche allerdings nicht selbsttragend waren, d.h. keine von Substrat separierbaren Folien.

Gegenstand der Erfindung ist ein Verfahren zur Herstellung von Monofolien aus ABS-Kunststoffen oder Gemischen von ABS-Kunststoffen mit anderen Thermoplasten mit einer Foliendicke von 1 bis 200 µm, die selbsttragend, transparent, einfärbbar und galvanisierbar sind, das dadurch gekennzeichnet ist, daß man einer 5 bis 45 Gew.-%igen Lösung eines ABS-Kunststoffs - gegebenenfalls mit bis zu 50 Gew.-%, bezogen auf ABS-Kunststoff, eines weiteren Thermoplasten - in einem inerten organischen Lösungsmittel 10⁻⁴ bis 1 Gew.-%, bezogen auf das ABS, Dioctylphosphat, Mono-2-hexyldecylphosphat oder Di-2-hexyldecylphosphat zugefügt, die Lösung in an sich bekannter Weise auf einen Träger vergießt, das Lösungsmittel entfernt und die gebildete Folie vom Träger trennt.

Für das Verfahren geeignete ABS-Kunststoffe sind insbesondere Pfropfpolymerisate von Styrol und Acrylnitril auf Polybutadien, gegebenenfalls im Gemisch mit Styrol-Acrylnitril-Copolymerisaten.

Geeignete weitere thermoplastische Kunststoffe sind z.B. aromatische Polycarbonate, Polyvinylchlorid und Ethylenvinylacetat-Copolymerisate.

Als inerte Lösungsmittel kommen in Frage: Monochloromethan, Dichlormethan, Trichlormethan, Tetrachlormethan, Ethylenchloridchlorbenzol, Methylethylketon, Tetrahydrofuran und gegebenenfalls zusätzlich Methanol, Ethanol, Aceton, Toluol, Xylol, Ethylenglykol und dessen Mono- und -diether, Propylenglykol und seine Ether, Glycerin, Laurylalkohol und seine Ether und Ester und Phthalsäureester.

Erfindungsgemäß anwendbare Trennmittel sind bevorzugt organische Phosphate, Phosphonate und Phosphite, insbesondere mit Kohlenwasserstoffresten mono-, di- oder trisubstituierte Produkte. Geeignete Kohlenwasserstoff-Substituenten sind Alkylgruppen mit 1 bis 22 Kohlenstoffatomen, bevorzugt mit 16 bis 18 Kohlenstoffatomen, die gegebenenfalls mit Carboxy-, Sulfo- oder Hydroxygruppen substituiert sein können, wie Methyl-, Ethyl-, Isopropyl-, Hexyl-, n-Octadecyl, 2-Hexyldecyl, 2-(1-Methyl-2-tert.-butyl-ethyl)-5-methyl-6-tert.-butyl-n-hexyl (auch als 2,2,4,5,8,10,10-Heptamethylmethyl bezeichnet) oder Carboxymethyl, Dodecylsulfonyl- bzw. Hydroxyhexyl sowie Arylgruppen, wie Phenyl und substituierte Arylgruppen, wie Cresyl, Tolyl oder Benzyl.

Beispiele für geeignete Trennmittel sind: Dioctylphosphat, Mono-2-hexyldecylphosphat und Di-2-hexyldecylphosphat.

Die Formtrennmittel werden den Kunststofflösungen in Mengen von etwa 10⁻⁴ bis 1 Gew.-%, bezogen auf den Kunststoff, vor dem Vergießen zugesetzt.

Das Verfahren kann im allgemeinen wie folgt durchgeführt werden:
Man löst den Kunststoff in einem geeigneten Lösungsmittel auf, setzt das Trennmittel zu, gießt die Lösung auf ein Band oder eine Trommel z.B. aus Edelstahl, entfernt einen Teil des Lösungsmittels durch Verdampfen bis sich eine zusammenhängende Folie gebildet hat, die von der Trommel oder dem Band abgehoben werden kann. Danach wird das restliche Lösungsmittel in einem Trockenschrank entfernt. Für die Bildung der Folie wendet man - je nach Lösungsmittel - bevorzugt Temperaturen von 20 bis 60°C an, für das Nachtrocknen Temperaturen von 20 bis 150°C.

Es ist möglich, den Kunststoffen, bzw. ihren Lösungen, vor der Folienherstellung übliche Zusätze beizufügen, z.B. Pigmente (Ruß, Titandioxid), Flammschutzmittel, Antistatika.

Der Erfindung liegt somit auch die Erkenntnis zugrunde, daß ein ABS-Kunststoff mit inerten organischen Lösungsmitteln in eine geeignete kolloidale Lösung zu überführen ist, die erst das Vergießen auf Trommel- bzw. Bandgießmaschinen unter Folienbildung ermöglicht, sowie, daß durch ein geeignetes Trennmittel die erhaltene Gießfolie vom Träger wieder abzulösen ist und so selbsttragende (freitragende) Monofolien erhalten werden.

Die erfindungsgemäßen Folien sind geeignet als Umhüll-, Abdeck- und Verpackungsfolien. Sie können metallisiert, gereckt, tiefgezogen und geschrumpft werden.

### Ausführungsbeispiel

250 g ABS-Kunststoff (ein Pfropfpolymerisat von 50 Gew.-Teilen eines Styrol:Acrylnitril-Gemischs (72:28) und 50 Gew.-Teile Polybutadien gemischt mit einem Styrol-Acrylcopolymerisat (72:28) im Gewichtsverhältnis von 1:1) werden bei 20°C in 750 g Dichlormethan gelöst und der Lösung 1 ml Di-2-hexyldecylphosphat zugefügt. Die Lösung wird auf eine sich drehende Walze aus Edelstahl bei ca. 20°C gegossen. Nach ca. 30 Sekunden kann die durch Verdunsten des Lösungsmittels gebildete Folie abgehoben werden. Das restliche Lösungsmittel wird bei 30°C entfernt, indem man die Folie durch einen Trockenschrank zieht. Die erhaltene lösungsmittelfreie Folie hat eine Dicke von 50 µm.

## Patentansprüche

1. Verfahren zur Herstellung von Monofolien aus ABS-Kunststoffen oder Gemischen von ABS-Kunststoffen mit anderen Thermoplasten mit einer Foliendicke von 1 bis 200 µm, die selbsttragend, transparent, einfärbbar und galvanisierbar sind, dadurch gekennzeichnet, daß man einer 5 bis 45 Gew.-%igen Lösung eines ABS-Kunststoffs - gegebenenfalls mit bis zu 50 Gew.-%, bezogen auf ABS-Kunststoff, eines weiteren Thermoplasten - in einem inerten organischen Lösungsmittel 10⁻⁴ bis 1 Gew.-%, bezogen auf das ABS, Dloctylphosphat, Mono-2-hexyldecylphosphat oder Di-2-hexyldecylphosphat zugefügt, die Lösung in an sich bekannter Weise auf einen Träger vergießt, das Lösungsmittel entfernt und die gebildete Folie vom Träger trennt.

## Claims

1. A process for producing monofilms of ABS-plastics, or mixtures of ABS-plastics with other thermoplastics, having a film thickness of 1 to 200 µm, which are unsupported, transparent and can be dyed and galvanised, characterised in that 10⁻⁴ to 1% by weight by reference to ABS-plastic of dioctyl phosphate, mono-2-hexyldecyl phosphate or di-2-hexyldecyl phosphate is added to a 5 to 45% by weight solution of an ABS-plastic - optionally with up to 50% by weight of another thermoplastic, the weight calculated by reference to ABS-plastic - in an inert organic solvent. The solution is poured on to a carrier in a manner known per se, the solvent is removed and the film formed is separated from the carrier.

## Revendications

1. Procédé de production de monofeuilles de matières plastiques ABS ou de mélanges de matières plastiques ABS avec d'autres matières thermoplastiques, ayant une épaisseur de feuille de 1 à 200 µm, qui sont autoportantes et transparentes et qui peuvent être colorées et galvanisées, caractérisé en ce qu'on ajoute 10⁻⁴ à 1 % en poids, par rapport à l'ABS, de phosphate de dioctyle, de phosphate de mono-2-hexyldécyle ou de phosphate de di-2-hexyldécyle à une solution à 5-45 % en poids d'une matière plastique ABS - le cas échéant avec jusqu'à 50 % en poids, par rapport à la matière plastique ABS, d'une autre matière thermoplastique - dans un solvant organique inerte, on coule la solution d'une manière connue sur un support, on chasse le solvant et on sépare du support la feuille formée.
